# EUROPÄISCHE PATENTSCHRIFT

(11) **EP 2 052 277 B1**
(45) Veröffentlichungstag und Bekanntmachung des Hinweises auf die Patenterteilung: **19.03.2014**
(21) Anmeldenummer: 07765241.0
(22) Anmeldetag: 20.07.2007
(51) Int. Cl.: G01S 7/38, F41H 13/00, F42D 5/04, G01V 3/12, H04K 3/00

(54) **VERFAHREN ZUR DAUERHAFTEN STÖRUNG / ZERSTÖRUNG EINER ELEKTRONIK, INSBESONDERE EINER SPRENGFALLE ODER DERGLEICHEN**
METHOD FOR PERMANENT DISTURBANCE/DESTRUCTION OF ELECTRONICS, IN PARTICULAR OF A BLAST CASE OR THE LIKE
PROCEDE DE MISE EN DEFAUT / DE DESTRUCTION DURABLE D'UN CIRCUIT ELECTRONIQUE, NOTAMMENT D'UN PIEGE EXPLOSIF OU SIMILAIRE

(30) Priorität: 17.08.2006 DE 102006038626
(43) Veröffentlichungstag der Anmeldung: 29.04.2009
(73) Patentinhaber: Rheinmetall Waffe Munition GmbH, 29345 Unterlüss (DE)
(72) Erfinder: JUNG, Markus, 29358 Eicklingen (DE); WOLLMANN, Gerd, 29229 Celle (DE)
(74) Vertreter: Dietrich, Barbara
(86) Internationale Anmeldenummer: PCT/EP2007/006460
(87) Internationale Veröffentlichungsnummer: WO 2008/019749

(56) Entgegenhaltungen:
- GB-A- 2 381 077
- US-A1- 2004 095 243
- US-A1- 2006 082 488
- US-A1- 2006 164 283
- "Terror-Abwehr mit High-Tech: HPEM von Rheinmetall gegen Sprengfallen"[Online] 23. November 2005 (2005-11-23), Seiten 1-3, XP002455792 Gefunden im Internet: URL:http://www.rheinmetall-defence.com/ind ex.php?lang=2&fid=3305> [gefunden am 2007-10-18]

## Beschreibung

Die Erfindung betrifft ein Verfahren, mit Hilfe dessen eine dauerhafte Störung / Zerstörung eines Senders bzw. eines Empfängers, beispielsweise als Komponente einer Sprengfalle, möglich ist und damit ein empfängerseitiges Auslösen verhindert werden kann.

Sprengfallen oder so genannte IED's sind Vorrichtungen, die in der Regel aus vier Hauptgruppen bestehen, einem Trigger für das elektrische Auslösen der Vorrichtung, einer Safe and Arm- Einheit, Explosivstoffen alleine oder in Verbindung mit giftigen Chemikalien, biologischen Giftstoffen oder radiologischem Material und einem Effektor. Für die Triggerung des internen elektrischen Auslösers werden in der Regel funkbasierte Auslöseeinheiten, so genannte RCIED. verwendet.

Ein bekanntes Verfahren bzw. eine bekannte Vorrichtung zur Störung einer Kommunikationsstrecke zwischen wenigstens einem Sender und wenigstens einem Empfänger ist der Einsatz von Störsendern (Jammern). Die Aufgabe eines Jammers besteht in der Regel darin, alle im Umkreis seines Wirkungsbereichs befindlichen Empfänger zu stören. Dazu wird einem zwischen Sender und Empfänger gesendeten Nutzsignal ein Störsignal, beispielsweise ein Rauschsignal ohne Informationsgehalt, ausreichender Stärke aufgeprägt, um so das Nutzsignal zu überdecken und zu verhindern, dass es vom Empfänger genutzt werden kann. Sobald die Störreichweite des Jammers beispielsweise überschritten wird, ist jedoch die Gefahr einer Auslösung wieder vorhanden. Zudem sendet ein Jammer nicht kontinuierlich sondern in Zeitintervallen.

Die US 2006/082488 A betrifft eine Vorrichtung für das Feststellen der elektromagnetischen Position von elektronischen Ausrüstungen. Die Vorrichtung umfasst Mittel eines Emitters für das Liefern einer verstärkten elektromagnetischen Energie, indem sie ein angewendetes elektromagnetisches Gebiet verwendet, das durch Emitter und Empfängereinrichtung für das Empfangen unbeabsichtigter und beabsichtigter elektromagnetischer Emission- Signatur derart gezielter elektronischer Vorrichtung erzeugt wird.

Die Erfindung stellt sich nun die Aufgabe, ein Verfahren und eine Vorrichtung anzugeben, die es ermöglichen, eine dauerhafte Unterbrechung zwischen einem Sender und einem mit diesem zusammenwirkenden Empfänger zu schaffen.

Gelöst wird die Aufgabe durch die Merkmale des Patentanspruchs 1. Vorteilhafte Ausgestaltungen sind in den Unteransprüchen aufgezeigt.

Die Erfindung geht dabei von der Überlegung aus, dass insbesondere eine dauerhafte Kommunikationsstörung dann realisierbar ist, wenn eine Zerstörung der Sender- bevorzugt aber der Empfängerelektronik erfolgt und damit eine Kommunikation zwischen beiden unmöglich gemacht wird.

Diese Vorgehensweise der Zerstörung einer Elektronik ist aus dem Bereich der nicht letalen Zerstörung von Zielen bekannt. Hier werden neben Hochleistungsmikrowellen-Quellen (HPM = high-power-microwave) auch explosivstoffgetriebene RF-Generatoren (RF = radio frequency) verwendet, mit deren Hilfe durch ein zielgerichtetes Senden von RF-Strahlen die Elektronik eines Ziels zerstört oder die Funktion durch Blenden oder Stören beeinträchtigt wird, ohne das Ziel selbst zu zerstören (DE 199 59 358 A1).

Prinzipiell kann das Verfahren zur Störung / Zerstörung der Elektronik für die Kommunikationsunterbrechung unter Ausnutzung der Detektionsmöglichkeit einer Elektronik mittels NLJD durchgeführt werden. Dieses NLJD-Verfahren besitzt die Fähigkeit, mit Halbleiterbauelementen aufgebaute Schaltungen detektieren zu können. Durch das nichtlineare Verhalten einzelner Bauelemente werden in die Schaltung eingekoppelte Signale einer festen Frequenz in Signale mit der Vielfachen der eingestrahlten Frequenz umgewandelt und wieder abgestrahlt. Ein derartiges Verfahren sowie ein entsprechender nichtlinearer Übergangsdetektor werden in der US 6,163,259 A ausführlich beschrieben. Ein weiterer nichtlinearer Übergangsdetektor wird mit der WO 02/065419 A1 offenbart. Eine weitere WO 2004/038455 A1 beschäftigt sich mit einem Verfahren und einer Vorrichtung zur Detektion von so genannten Abhörgeräten. Prinzipiell arbeitet das Verfahren durch Auswertung einer 2. und einer 3. harmonischen, am Ziel reflektierten Primärfrequenz. Aus diesen beiden harmonischen wird dann die Information über das Vorhandensein oder Nichtvorhandensein einer elektronischen Schaltung gezogen.

In Weiterführung der Erfindung ist für die dauerhafte Störung der Kommunikation eine so genannte Frontdoor- Einkopplung als auch eine Backdoor- Einkopplung möglich. Bei der Frontdoor- Einkopplung werden die Eingangs- bzw. Sendestufen des Empfängers bzw. Senders zerstört. Bei der Backdoor -Einkopplung kann die Leistung in die Sende- bzw. Empfangsstruktur über Schlitze, Öffnungen und/ oder Leitungen, wie beispielsweise Signalleitungen, Spannungsversorgung etc. eingekoppelt und somit die Zerstörung bewirkt werden: Bekannte NLJD - Systeme arbeiten jedoch auf einer festen Frequenz. Um jedoch eine effektive Zerstörung gewährleisten zu können, sollten daher sowohl für die Frontdoor- als auch die Backdoor- Einkopplung die Frequenzen für die optimale Einkopplung bekannt sein.

Hier greift die Erfindung im weiteren Schritt die Idee auf, abstimmbare Sender und Detektoren (Empfänger) in die Detektionssysteme einzubinden und ein schmalbandiges, in der Frequenz variierbares Signal zu verwenden, um die Frequenzen für die optimale Einkopplung zu ermitteln.

Kennt das Detektionssystem diese Frequenzen, ob mit den einfachen NLJD-Verfahren oder dem letzgenannten, kann im zweiten Schritt der Erfindung eine Zerstörung eines mit dem Empfänger des Zieles kommunizierenden Senders oder beim Empfänger selbst initiiert werden. Dazu wird nach Ermittlung der vorzugsweise optimalen Frequenzen beispielsweise ein leistungsstarkes Signal in den Ortsbereich des Zieles bzw. des Empfängers mit der bestimmten / ermittelten Frequenz gesendet.

Der scannbare Frequenzbereich sollte für die Detektion als auch spätere Zerstörung der Elektronik so gewählt werden, dass er sowohl die theoretischen Grenzen für die Backdoor-Einkopplung (aus Geometrie des Zieles ableitbar) als auch die für die Kommunikationssysteme typischen Frontdoor- Frequenzen umfasst. Der Frequenzbereich liegt bevorzugt zwischen 10 - 1000 MHz. Die Empfangsfrequenz für die 2. und 3. harmonische wird entsprechend der Sendefrequenz nachgeführt.

Aufgrund weiterer technischer Informationen, wie Frequenzplan, typische Übertragungskanäle etc., sowie nicht technischer Informationen, wie Aufklärung, gesperrte Kanäle etc., werden bevorzugt vom Detektionssystem für die Bekämpfung eine oder mehrere Frequenzen ausgewählt. Ferner ermittelt das Detektionssystem den Raumwinkel, in dem sich das Ziel zum System befindet. Nun wird für die Zerstörung bzw. Bekämpfung des Zieles auf den ermittelten Frequenzen und in dem definierten Raumwinkel mittels eines breitbandigen, abstimmbaren Leistungssenders durchgeführt.

Handelt es sich beim Ziel um ein Funkgerät, so kann zusätzlich der Empfangsgewinn des Ziels genutzt werden, wenn die Sendefrequenz innerhalb der Empfangsbandbreite des Ziels liegt.

Geschlossene Systeme wie ein IED weisen die Eigenschaft auf, nur durch Transmissionsfenster / offene Türen / Schlitze mit der Umgebung kommunizieren zu können. Durch die abstimmbaren Sender / Empfänger des Detektionssystems (der Detektionssysteme) ist es nunmehr möglich, die Frequenzlöcher bzw. Arbeitsfrequenzen eines insbesondere abgeschirmten Targets / Zieles zu finden.

Ein weiterer Vorteil dieser Lösung besteht darin, dass in Umgebungen, in denen Geräte mit unterschiedlichen Frequenzen vorhanden sind, diese Frequenzen zur Detektion nicht berücksichtigt sondern vielmehr beim Scannen der Frequenz ausgeschlossen werden. Dadurch läuft das Verfahren schneller ab.

Durch die Einbeziehung der Backdoor- Einkopplung ist es nicht mehr zwingend notwendig, dass der gesamte Frequenzbereich, der für die Kommunikation bekanntlich genutzt wird, abgesteckt werden muss, da der Frequenzbereich für die Backdoor- Einkopplung sehr stark von den geometrischen Abmessungen des Zieles abhängig ist.

Werden elektronische Komponenten im Ziel zerstört, so werden sich die spektralen Abstrahlungen ebenfalls ändern. Dies schafft die Möglichkeit, nach Durchführung bzw. in geeigneten Zeitfenstern während der Bestrahlung, die spektrale Abstrahlung zu messen und damit die Zerstörung detektieren / bestätigen zu können.

Anhand eines Ausführungsbeispiels mit Zeichnung soll die Erfindung näher erläutert werden.

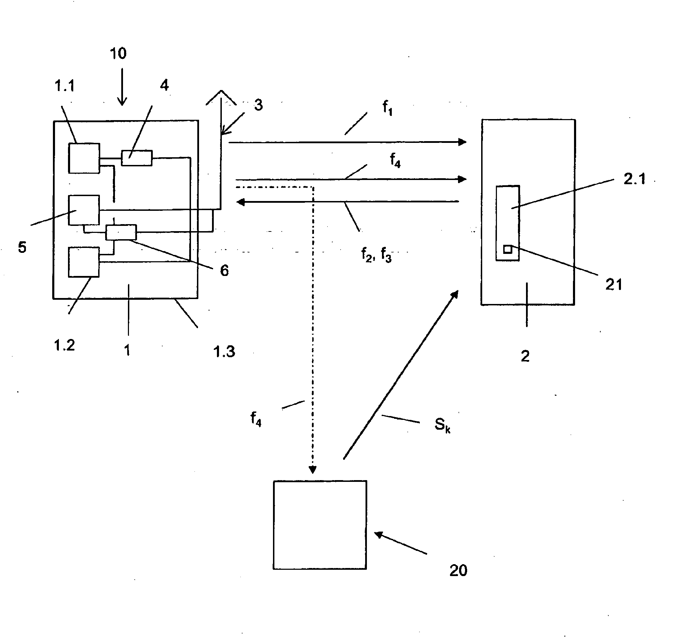

Es zeigt die einzige Figur eine Vorrichtung 10 mit einem Detektionssystem 1, hier einen nichtlinearen Übergangsdetektor 1, bestehend aus wenigstens einem Sender 1.1 und wenigstens einem Empfänger 1.2, die sich in einer bevorzugten Ausführung in einem Gehäuse 1.3 befinden, zum Detektieren der Elektronik 2.1 eines Zieles (Target) 2. Getrennte Anordnungen von Sender 1.1 und Empfänger 1.2 sind auch möglich. Des Weiteren ist wenigstens ein weiterer Sender 5 zum Abstrahlen einer Sendefrequenz f₄ zur Zerstörung der Elektronik 2.1 des Zieles 2 in die Vorrichtung 10 eingebunden. Mit 20 ist ein mit dem Ziel 2 kommunizierender Sender gekennzeichnet. Mit 6 ist die Auswerteeinheit gekennzeichnet. Sie steuert die Sendefrequenz f und wertet die in das Detektionssystem 1wieder eingehenden Signale aus

Der Übergangsdetektor 1 verfügt über wenigstens eine Antenne 3. über die ein schmalbandiges Signal innerhalb einer Bandbreite von mehreren 100 MHz abgestrahlt werden kann. Diese eine Antenne 3 ist eine Breitbandantenne, die in der Lage ist, in beiden Polarisationen zu senden und zu empfangen. Möglich sind auch zwei oder drei Antennen (nicht näher dargestellt), wobei beispielsweise jedem Sender 1.1, 5 und jedem Empfänger 1.2 eine eigene Antenne zugeordnet werden kann.

Entsprechend der abgestrahlten Frequenz f₁ werden im Empfangsbereich des Detektors 1.2 nur Signale der Frequenzen f₂= 2*f₁ und f₃= 3*f₁ empfangen und in der Auswerteeinheit ausgewertet. Die Frequenz f₁ kann durch eine Elektronik 4 dabei sowohl linear als auch in bestimmten Schritten verändert werden. Diese Änderung erfolgt so lange, bis sich eine optimale Sendefrequenz f₁ eingestellt hat. (Dies ist dadurch erkennbar, dass auch die beiden harmonischen mit einer maximalen Signalstärke wieder auf den Empfänger 1.2 auftreffen. Dabei kann davon ausgegangen werden, dass die optimale Sendefrequenz f₁ als auch die harmonischen mit den so genannten Frequenzlöchern des Zieles 2 übereinstimmen und die Empfangsbandbreite des Zieles darstellen.)

Mit dieser optimalen bzw. optimierten Frequenz f₁ wird nun das Ziel 2 bestrahlt und aus der transformierten Antwort im Detektor 1.2 auf das Vorhandensein von nichtlinearen Schaltungen bzw. Bauelemente im Ziel 2 geschlussfolgert. Diese optimierte Frequenz f₁ erlaubt zudem eine größere Entfernungsmessung zwischen dem Übergangsdetektör 1 und dem Ziel 2.

Durch diese Zieldetektion werden der Frequenzbereich f₄ der Kommunikationsstrecke Sₖ (Empfangsbandbreite) im Frontdoor bzw. die Einkoppelfenster im Backdoor Bereich des Senders 20 sowie der Ort des RCIED's 21 (des Zieles 2) in der Auswerteeinheit 6 ermittelt. Nach Ermittlung der optimalen Frequenzen durch die Auswerteeinheit 6 wird ein leistungsstarkes Signal durch den Sender 5 in den Ortsbereich auf der durch das Detektionssystem 1 ermittelten Frequenz f₄ gesendet. Dadurch wird nun die detektierte Frontdoor- bzw. Backdoor- Frequenz in den RCIED 21 der Elektronik 2.1 eingekoppelt und die elektronischen Bauelemente, vorzugsweise der Empfangsteil zerstört.

In Fällen, bei denen die Eingangsverstärkung des Zieles 2 genutzt wird, empfiehlt es sich, eine für die Kommunikation dieser Ziele 2 typische Frequenz zu wählen.

## Patentansprüche

1. Vorrichtung (10) zur dauerhaften Störung der Kommunikation zwischen einem Sender (20) und einem Empfänger (21), mit einer Elektronik (2.1), eines Zieles (2), insbesondere einer Sprengfalle oder dergleichen, durch Zerstörung der Sender- bevorzugt aber der Empfängerelektronik (2.1), aufweisend ein Detektionssystem (1) zur Detektion der Elektronik (2.1) des Zieles (2) sowie Mittel (5) zum Zerstören dieser Elektronik (2.1), **dadurch gekennzeichnet, dass** das Detektionssystem (1) über wenigstens eine Antenne (3) zum Abstrahlen der veränderbaren Frequenz (f₁) des Senders (1.1) sowie zum Empfang der von der Elektronik (2.1) des Zieles (2) reflektierten 2. und 3. harmonischen verfügt und im Detektionssystem (1) eine Elektronik (4) eingebunden ist, welche die Frequenz (f₁) des Senders (1.1) des Detektionssystems (1) sowohl linear als auch in bestimmten Schritten verändert, bis sich eine optimale Sendefrequenz (f₁) zur Detektion der Elektronik (2.1) des Zieles (2) eingestellt hat, wobei die Signalstärke der empfangenen harmonischen maximal ist.

2. Vorrichtung nach Anspruch 1, **dadurch gekennzeichnet, dass** das Detektionssystem (1) ein NLJD ist und aus wenigstens einem Sender (1.1) und einem Empfänger (1.2) besteht, die in einem gemeinsamen Gehäuse (1.3) untergebracht sein können und wenigstens eine Antenne (3) aufweist.

3. Vorrichtung nach Anspruch 1 oder 2, **dadurch gekennzeichnet, dass** eine Auswerteeinheit (6) vorgesehen ist, die im Detektionssystem (1) eingebunden ist.

4. Vorrichtung nach einem der Ansprüche 1 bis 3, **dadurch gekennzeichnet, dass** nur eine Antenne (3) in das Detektionssystem (1) eingebunden ist.

5. Vorrichtung nach einem derAnsprüche 1 bis 4, **dadurch gekennzeichnet, dass** das Mittel (5) ein Sender ist, der ein schmalbandiges, leistungsstarkes Signal in den Ortsbereich des Zieles (2) über eine Antenne ausstrahlt.

6. Vorrichtung nach einem der Ansprüche 1 bis 5, **dadurch gekennzeichnet, dass** der Sender (5) zur Störung und / oder Zerstörung auf die Antenne (3) des Detektionssystems (1) zurückgreift.

7. Verfahren zur dauerhaften Störung der Kommunikation zwischen einem Sender (20) und eines Empfängers (21) einer Elektronik (2.1) eines Zieles (2) insbesondere einer Sprengfalle oder dergleichen, durch Zerstörung der Sender- bevorzugt aber der Empfängerelektronik (2.1), wobei in einem ersten Schritt die Elektronik (2.1) des Zieles (2) detektiert und in einem zweiten Schritt diese dann gestört und zerstört wird, **dadurch gekennzeichnet, dass** zur Detektion der Elektronik (2.1) des Zieles (2) eine variierbare Frequenz (f₁) abgestrahlt wird sowie im Empfangsbereich des Empfängers (1.2) nur Signale der an der Elektronik (2.1) reflektierten Frequenzen (f₂, f₃) als 2. und 3. harmonische empfangen und ausgewertet werden und
die Frequenz (f₁) sowohl linear als auch in bestimmten Schritten verändert wird, bis sich eine optimale Sendefrequenz (f₁) eingestellt hat, wobei die Signalstärke der empfangenen harmonischen maximal ist.

8. Verfahren nach Anspruch 7, **dadurch gekennzeichnet, dass** der variable Frequenzbereich für die Detektion als auch spätere Zerstörung der Elektronik (2.1) so gewählt wird, dass er sowohl die theoretischen Grenzen für eine Backdoor- Einkopplung beim Sender (20) als auch die für die Kommunikationssysteme typischen Frontdoor- Frequenzen des Empfängers (21) des Zieles (2) umfasst, und bevorzugt zwischen 10 - 1000 MHz liegt.

9. Verfahren nach Anspruch 7 oder 8, **dadurch gekennzeichnet, dass** mittels weiterer technischer Informationen, wie Frequenzplan oder typische Übertragungskanäle, sowie nicht technischer Informationen, wie Aufklärung oder gesperrte Kanäle, für die Bekämpfung eine oder mehrere Frequenzen vorab ausgewählt und damit der scannbare Frequenzbereich eingeschränkt werden können.

10. Verfahren nach einem der Ansprüche 7 bis 9, **dadurch gekennzeichnet, dass** durch das Detektionssystem (1) ein Raumwinkel zum Ziel (2) ermittelt wird und für die Zerstörung bzw. Bekämpfung des Zieles (2) auf den ermittelten Frequenzen und in dem definierten Raumwinkel ein breitbandiges Signal (f₄) vom Sender (5) ausgestrahlt wird.

11. Verfahren nach einem der Ansprüche 7 bis 10, **dadurch gekennzeichnet, dass** eine Überprüfung der Wirkung gegeben ist und ggf. weitere Bestrahlungen / Bekämpfungen eingeleitet werden können.

## Claims

1. Apparatus (10) for permanently disturbing the communication between a transmitter (20) and a receiver (21), having electronics (2.1), for a target (2), particularly a booby trap or the like, by destroying the transmitter electronics but preferably the receiver electronics (2.1), having a detection system (1) for detecting the electronics (2.1) of the target (2) and also means (5) for destroying these electronics (2.1), **characterized in that** the detection system (1) has at least one antenna (3) for emitting the variable frequency (f₁) of the transmitter (1.1) and for receiving the 2nd and 3rd harmonics reflected by the electronics (2.1) of the target (2) and the detection system (1) incorporates electronics (4) that alter the frequency (f₁) of the transmitter (1.1) of the detection system (1) both linearly and in particular steps until an optimum transmission frequency (f₁) for detecting the electronics (2.1) of the target (2) has been set, wherein the signal strength of the received harmonics is at a maximum.

2. Apparatus according to Claim 1, **characterized in that** the detection system (1) is an NLJD and comprises at least one transmitter (1.1) and a receiver (1.2), which may be accommodated in a shared housing (1.3), and has at least one antenna (3).

3. Apparatus according to Claim 1 or 2, **characterized in that** an evaluation unit (6) is provided that is incorporated in the detection system (1).

4. Apparatus according to one of Claims 1 to 3, **characterized in that** only one antenna (3) is incorporated in the detection system (1).

5. Apparatus according to one of Claims 1 to 4, **characterized in that** the means (5) is a transmitter that emits a narrowband, high-power signal into the locals area of the target (2) via an antenna.

6. Apparatus according to one of Claims 1 to 5, **characterized in that** the transmitter (5) resorts to the antenna (3) of the detection system (1) for disturbance and/or destruction.

7. Method for permanently disturbing the communication between a transmitter (20) and a receiver (21) for electronics (2.1) of a target (2), particularly a booby trap or the like, by destroying the transmitter electronics but preferably the receiver electronics (2.1), wherein a first step involves the electronics (2.1) of the target (2) being detected and a second step involves said electronics then being disturbed and destroyed, **characterized in that** in order to detect the electronics (2.1) of the target (2) a variable frequency (f₁) is emitted and the reception range of the receiver (1.2) receives and evaluates only signals at the frequencies (f₂, f₃) reflected by the electronics (2.1) as 2nd and 3rd harmonics, and
the frequency (f₁) is altered both linearly and in particular steps until an optimum transmission frequency (f₁) has been set, wherein the signal strength of the received harmonics is at a maximum.

8. Method according to Claim 7, **characterized in that** the variable frequency range for the detection and later destruction of the electronics (2.1) is chosen such that it comprises both the theoretical limits for backdoor injection on a transmitter (20) and the frontdoor frequencies of the receiver (21) of the target (2) that are typical for communication systems, and is preferably between 10 and 1000 MHz.

9. Method according to Claim 7 or 8, **characterized in that** further technical information, such as frequency plan or typical transmission channels, and also non-technical information, such as reconnaissance or blocked channels, for combat can be used to select one or more frequencies in advance and hence to restrict the scannable frequency range.

10. Method according to one of Claims 7 to 9, **characterized in that** the detection system (1) ascertains a solid angle for the target (2), and a wideband signal (f₄) is emitted by the transmitter (5) on the ascertained frequencies and at the defined solid angle in order to destroy or combat the target (2).

11. Method according to one of Claims 7 to 10, **characterized in that** there is a check on the effect and if need be further irradiation/combat operations can be initiated.

## Revendications

1. Dispositif (10) destiné au brouillage permanent de la communication entre un émetteur (20) et un récepteur (21), comportant un système électronique (2.1), d'une cible (2), notamment d'un engin piégé ou autre, par destruction du système électronique (2.1) de l'émetteur, mais également, de préférence, du récepteur, comprenant un système de détection (1) destiné à détecter le système électronique (2.1) de la cible (2) ainsi que des moyens (5) destinés à détruire ce système électronique (2.1), **caractérisé en ce que** le système de détection (1) possède au moins une antenne (3) destinée à émettre la fréquence modifiable (f₁) de l'émetteur (1.1) et à recevoir les 2ème et 3ème harmoniques réfléchis par le système électronique (2.1) de la cible (2), et un système électronique (4) est intégré au système de détection (1), lequel système électronique modifie la fréquence (f₁) de l'émetteur (1.1) du système de détection (1) non seulement linéairement mais aussi par pas déterminés jusqu'à ce qu'une fréquence d'émission (f₁) optimale pour la détection du système électronique (2.1) de la cible (2) se soit ajustée, l'intensité de signal des harmoniques reçus étant alors maximale.

2. Dispositif selon la revendication 1, **caractérisé en ce que** le système de détection (1) est un NLJD (détecteur de jonctions non linéaires) et est constitué d'au moins un émetteur (1.1) et un récepteur (1.2) qui peuvent être logés dans un boîtier commun (1.3) et **en ce qu'**il comprend au moins une antenne (3).

3. Dispositif selon la revendication 1 ou 2, **caractérisé en ce qu'**il est prévu une unité d'évaluation (6) qui est intégrée au système de détection (1) .

4. Dispositif selon l'une quelconque des revendications 1 à 3, **caractérisé en ce qu'**une seule antenne (3) est intégrée au système de détection (1).

5. Dispositif selon l'une quelconque des revendications 1 à 4, **caractérisé en ce que** le moyen (5) est un émetteur qui émet un signal de forte puissance à bande étroite dans la région spatiale de la cible (2) par l'intermédiaire d'une antenne.

6. Dispositif selon l'une quelconque des revendications 1 à 5, **caractérisé en ce que** l'émetteur (5) utilise l'antenne (3) du système de détection (1) pour le brouillage et/ou la destruction.

7. Procédé destiné au brouillage permanent de la communication entre un émetteur (20) et un récepteur (21) d'un système électronique (2.1) d'une cible (2), notamment d'un engin piégé ou autre, par destruction du système électronique (2.1) de l'émetteur, mais également, de préférence, du récepteur, dans lequel, lors d'une première étape, le système électronique (2.1) de la cible (2) est détecté et, lors d'une seconde étape, celui-ci est brouillé et détruit, **caractérisé en ce que**, pour détecter le système électronique (2.1) de la cible (2), une fréquence modifiable (f₁) est émise et seuls des signaux ayant les fréquences (f₂, f₃) réfléchies par le système électronique (2.1) sous la forme des 2ème et 3ème harmoniques sont reçus et évalués dans la région de réception du récepteur (1.2), et
la fréquence (f₁) est modifiée non seulement linéairement mais aussi par pas déterminés jusqu'à ce qu'une fréquence d'émission (f₁) optimale se soit ajustée, l'intensité de signal des harmoniques reçus étant alors maximale.

8. Procédé selon la revendication 7, **caractérisé en ce que** la région de fréquence variable destinée à la détection ainsi qu'à la destruction ultérieure du système électronique (2.1) est sélectionnée de manière à ce qu'elle comprenne non seulement les limites théoriques permettant une injection de brouillage à effet indirect dans l'émetteur (20) mais également les fréquences de brouillage à effet direct, typiques des systèmes de communication, du récepteur (21) de la cible (2), et **en ce qu'**elle se situe de préférence entre 10 et 1000 MHz.

9. Procédé selon la revendication 7 ou 8, **caractérisé en ce que**, à l'aide d'informations techniques supplémentaires telles que le plan de fréquences ou que des canaux de transmission typiques, ou d'informations non techniques, telles que le dégagement ou les canaux verrouillés, une ou plusieurs fréquences sont préalablement sélectionnées pour le combat, de manière à ce que le domaine de fréquences analysable puisse être restreint.

10. Procédé selon l'une quelconque des revendications 7 à 9, **caractérisé en ce qu'**un angle solide vers la cible (2) est déterminé par le système de détection (1) et **en ce qu'**un signal à large bande (f₄) est émis par l'émetteur (5) sur les fréquences déterminées et dans l'angle solide défini pour la destruction ou le combat contre la cible (2).

11. Procédé selon l'une quelconque des revendications 7 à 10, **caractérisé en ce qu'**une vérification de l'effet est prévue et **en ce que** d'autres émissions/combats peuvent le cas échéant être déclenchés.
